# EUROPÄISCHE PATENTSCHRIFT

(11) **EP 0 708 545 B1**
(45) Veröffentlichungstag und Bekanntmachung des Hinweises auf die Patenterteilung: **17.10.2007**
(21) Anmeldenummer: 95116218.9
(22) Anmeldetag: 14.10.1995
(51) Int. Cl.: H04L 27/36, H04L 27/34

(54) **QAM Übertragung mit geringer Bandbreite**
Narrowband QAM transmission
Transmission MAQ à bande étroite

(30) Priorität: 21.10.1994 DE 4437618
(43) Veröffentlichungstag der Anmeldung: 24.04.1996
(73) Patentinhaber: Deutsche Telekom AG, 53113 Bonn (DE); Continental Electronics Corporation, Dallas Texas 75227 (US)
(72) Erfinder: Weber, Klaus, Dipl.-Ing., D-13357 Berlin (DE); Brakemeier, Achim, Dr.Dipl.-Ing., D-89134 Blaustein (DE); Rudolph, Dietmar, Prof. Dr.Dipl.-Ing., D-14163 Berlin (DE)

(56) Entgegenhaltungen:
- EP-A- 0 193 655
- EP-A- 0 608 697
- EP-A- 0 629 069
- EP-A- 0 708 546
- US-A- 4 955 072

## Beschreibung

Die Erfindung betrifft ein Verfahren und eine Schaltungsanordnung zur Übertragung von Signalen gemäß den Oberbegriffen der Ansprüche 1 und 6.

Dem Wunsch der Rundfunkhörer nach besserer übertragungsqualität wurde in der Vergangenheit durch die Einführung der Frequenzmodulation im VHF-Bereich und derzeit beabsichtigte Einführung des digitalen Rundfunks (DAB) im VHF-Bereich und L-Band Rechnung getragen. Die Rundfunkprogramme in den Bereichen Lang-, Mittel- und Kurzwelle werden bislang mit Amplitudenmodulation und der damit verbundenen geringen Qualität des Nachrichtenkanals übertragen, wodurch diese Frequenzbereiche an Akzeptanz verloren haben. Eine Digitalisierung der genannten Frequenzbereiche wird eine Erhöhung der übertragungsqualität ergeben und die Vorteile der für diese Frequenzen gültigen charakteristischen Ausbreitungsmerkmale erhalten. Es ist zu erwarten, daß es mit Sendern höherer Leistung (10 bis 100 kW) und digitalisierter übertragung möglich sein wird, größere Teile eines Kontinents mittels eines Lang-, Mittel- oder Kurzwellensenders mit einem Signal hoher Qualität zu vesorgen. Um eine große Wirtschaftlichkeit solcher Sender zu gewährleisten, ist es notwendig, Sender zu entwickeln, die einen hohen Wirkungsgrad aufweisen. Ferner ist darauf zu achten, daß das Signal möglichst eine geringe Bandbreite aufweist, um die bestehenden Frequenzbänder mit möglichst vielen Programmen betreiben zu können und um während einer Übergangszeit analogmodulierte Kanäle möglichst wenig zu stören.

Um die Bandbreite des abgestrahlten digitalen Signales gering zu halten, ist es notwendig, neben einer geeigneten Quellkodierung eine hochstufige digitale Modulation zu verwenden. Je mehr Stufen verwendet werden, um so geringer kann die Bandbreite gehalten werden.

Aus der Literatur (L.Kahn, Single-Sideband Transmission by Envelope Elimination and Restoration, Proceedings of the I.R.E, 1952, S.803 ff) ist ein Hochfrequenzverstärker bekannt, der mit hohem Wirkungsgrad betrieben wird. In der angegebenen Literaturstelle ist ein Sender beschrieben, der sich durch die getrennte Ansteuerung der Leistungsendstufe mit Betrag- und Phasensignal auszeichnet. Hierbei wird aus dem eingangseitigen Einseitenbandsignal durch Hüllkurvengleichrichtung das Hüllkurvensignal und durch Begrenzung der Amplitude des Eingangssignales ein Signal abgeleitet, das die Phaseninformation enthält aber in der Amplitude begrenzt ist. Die begrenzte hochfrequente Schwingung und das Hüllkurvensignal werden der im überspannten C-Betrieb arbeitenden Endstufe zugeführt, wodurch eine Verstärkung eines Einseitenbandsignales mit hohem Wirkungsgrad erzielt wird.

In der EP-0193655 ist ein Rundfunksender mit hoher Leistung und hohem Wirkungsgrad beschrieben, dergeeignet ist, ein Einseitenbandsignal abzustrahlen. Bei diesem Sender wird das analoge niederfrequente Modulationssignal abgetastet, digitalisiert und mittels Signalprozessortechnik in ein komplexes Signal bestehend aus Real- und Imaginärteil umgewandelt. Diese Umwandlung erfolgt mittels eines Hilberttransformators entsprechend der aus der Literatur bekannten Phasenmethode. Anschließend wird aus diesen Komponenten der Betrag und die Phase des Signales ermittelt. Wie in der oben angegebenen Schaltung werden dann das Gitter der Endstufenröhre mit dem phasenmodulierten hochfrequenten Träger angesteuert und die Anode mit dem Betragssignal, das dem Hüllkurvensignal entspricht, angesteuert.

In den vorgenannten Fällen wird ein analoges Signal mit hohem Wirkungsgrad übertragen.

Aufgabe der Erfindung ist es, ein Sendeverfahren und eine Anordnung zur Ausführung dieses Verfahrens zu schaffen, das die Übertragung von digitalen Signalen bei hohem Verstärkerwirkungsgrad und Erzielung von geringen Bandbreiten ermöglicht.

Diese Aufgabe wird erfindungsgemäß durch die in den Patentannsprüchen 1 und 6 genannten Merkmale gelöst. Vorteilhafte Weiterbildungen der Erfindung sind in den Unteransprüchen angegeben.

Die Erfindung ermöglicht in vorteilhafter Weise die Anwendung eines Senderverstärkers, der das zu übertragene Signal in eine Betrags- und Phasenkomponente aufspaltet, auf die Übertragung eines Digitalsignales unter Berücksichtigung der Forderung nach Erzielung von geringen Bandbreiten. Das erfindungsgemäße Verfahren kann deshalb vorteilhaft einen Übergang auf Digitalübertragung im Bereich der Lang-, Mittel- und Kurzwelle ermöglichen.

Anspruch 3 zeigt eine Ausgestaltung der Erfindung, die besonders vorteilhaft die Verwendung von Schaltverstärkern zur Verstärkung der Betragskomponente unterstützt und Anspruch 4 eine Ausgestaltung der Erfindung, die vorteilhaft die zusätzliche Übertragung eines konstanten Trägersignales ermöglicht, mit dem empfängerseitig mit einfachen Mitteln die genaue Trägerfrequenz und Bezugslage des übertragenen Signales ermittelbar ist.

In Anspruch 5 ist eine vorteilhafte Methode zur Gewinnung der Bezugsphase, die keine besondere Synchronisationssequenz benötigt, beschrieben.

Anhand der Zeichnungen werden Ausführungsbeispiele der Erfindung näher erläutert.
Fig.1 zeigt eine Anordnung zur Erzeugung der Betrags- und Phaseninformation eines digitalen Modulationssignales.
Fig.2 zeigt eine Anordnung zur Modulation einer Hochfrequenzschwingung nach Betrag und Phase mittels einer mit einer Röhre bestückten Verstärkerstufe.
Fig.3 zeigt eine Anordnung zur Modulation einer Hochfrequenzschwingung nach Betrag und Phase mittels einer mit Transistoren bestückten Verstärkerstufe.
Fig.4 zeigt die Konstellationsebene eines bevorzugten Signales.
Fig.5 zeigt die Konstellationsebene eines bevorzugten Signales, das kein Symbol im Nullpunkt der Konstellationsebene enthält.
Fig.6 zeigt die Konstellationsebene eines bevorzugten Signales, das eine gezielte Unsymmetrie enthält.
Fig.7 zeigt eine Konstellationsebene eines bevorzugten Signales, das vom Nullpunkt verschoben ist.

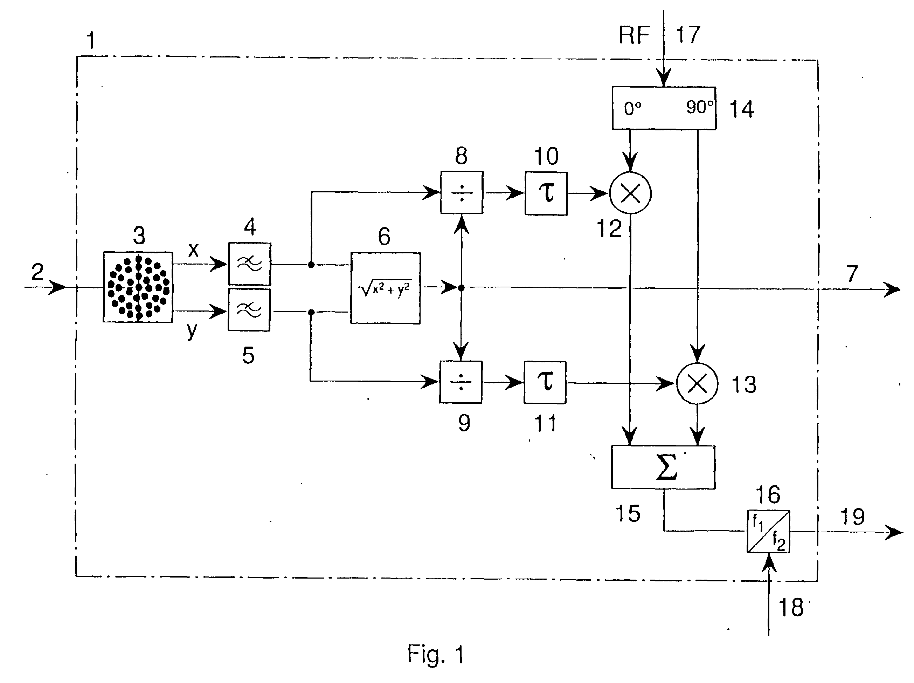

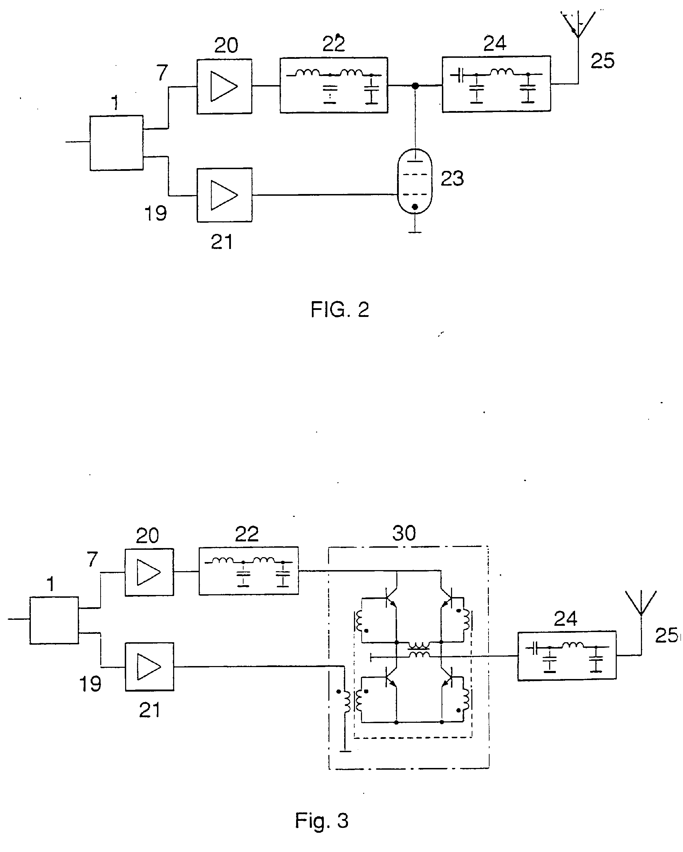

Das digitale Eingangssignal 2 der in Fig. 1 dargestellten digitalen Aufbereitungsschaltung 1 wird in dem Symbolwandler 3 in ein komplexes Signal, das in Form von Real- und Imaginärteil dargestellt wird, gewandelt. Eine Bandbegrenzung der Signalanteile erfolgt durch die Filter 4 und 5. Aus den so berechneten Komponenten wird in dem Betragsbildner 6 der Betrag des komplexen Signals ermittelt, der einerseits den Hüllkurvenverstärker 20 in den Figuren Fig.2 und Fig.3 ansteuert und andererseits die Komponenten der bandbegrenzten Signale in den Dividierern 8 und 9 normiert. Diese so berechneten normierten Komponenten werden den Verzögerern 10 und 11 zugeführt, um die Signallaufzeiten, von denen die im niederfrequenten Hüllkurvenzweig, bestehend aus Hüllkurvenverstärker 20 mit Filter 22, im allgemeinen größer ist als im hochfrequenten Phasenzweig, bestehend aus Treiberstufe 21, einander anzupassen.

Die verzögerten, normierten Signale werden den Träger- bzw. Zwischenfrequenzmodulatoren 12 und 13 an ihren Modulationssignaleingängen zugeführt. Diese Modulatoren werden an ihren Trägersignaleingängen mit den um 90 Grad zueinander verschobenen Komponenten der Träger- bzw. Zwischenfrequenzschwingung angesteuert und geben die modulierten Ausgangssignale an die Additionsschaltung 15. Im Fall der Benutzung einer Zwischenfrequenz wird der Additionstufe 15 der Frequenzumsetzer 16 nachgeschaltet, der die Zwischenfrequenz auf die eigentliche Trägerfrequenz umsetzt.

Für die Funktion der Schaltung ist es prinzipiell gleichbedeutend, ob die Modulatoren 12 und 13, die Phasenaufteilung 14 und die Additionsschaltung 15 in Form von analogen Schaltungen arbeiten oder die notwendigen Operationen in digitalisierter Form durchgeführt werden. Bei Verwendung von analogen Modulatoren sind die Verzögerer 10 und 11 um die entsprechenden Digital-Analog-Wandler zu ergänzen und bei Verwendung in digitaler Form das Ausgangssignal 19 zusätzlich digital-analog zu wandeln.

Das so gewonnene phasenmodulierte und normierte Trägerfrequenzsignal wird dann zur weiteren Verstärkung der Hochfrequenztreiberstufe 21 zugeführt, die eine für die Endstufe 23 oder 30 ausreichende Ansteuerspannung zur Verfügung stellt.
Das Betragssignal 7 wird mittels des Niederfrequenzverstärkers 20, der vorzugsweise als Schaltverstärker mit hohem Wirkungsgrad arbeitet, verstärkt. Als Schaltverstärker eignen sich Verstärker, die nach dem Prinzip des Tiefsetzstellers (pulsdauermodulierender Verstärker) oder nach dem Pulsstufenverstärkerprinzip arbeiten. Diesen Verstärkertypen ist gemeinsam, daß sie in der Lage sind, niederfrequente Signale inklusive deren Gleichspannungsanteile zu übertragen.

Als Endstufe eignet sich eine Elektronenröhre 23, die ihre Anodenspannung aus dem niederfrequenten Hülkurvenverstärkerzweig bezieht, der aus dem Verstärker 20 und dem nachgeschalteten Filter 22 besteht. Die Röhre wird, um einen hohen Wirkungsgrad zu erzielen, überspannt im C-Betrieb (Stromflußwinkel kleiner 90 Grad) betrieben. Über die Anodenspannung moduliert die Röhre 23 die am Steuergitter anliegende hochfrequente Trägerschwingung, die die Phasenmodulation enthält, in ihrer Amplitude.

Anstelle der Elektronenröhre 23 in Fig.2 kann alternativ eine transistorisierte Endstufe 30 verwendet werden. Vorteilhaft ist die Verwendung der dargestellten Brückenschaltung, in der die Transistoren kreuzweise im Schaltbetrieb betrieben werden. Der verwendete Schaltbetrieb gewährleistet einen hohen Wirkungsgrad.

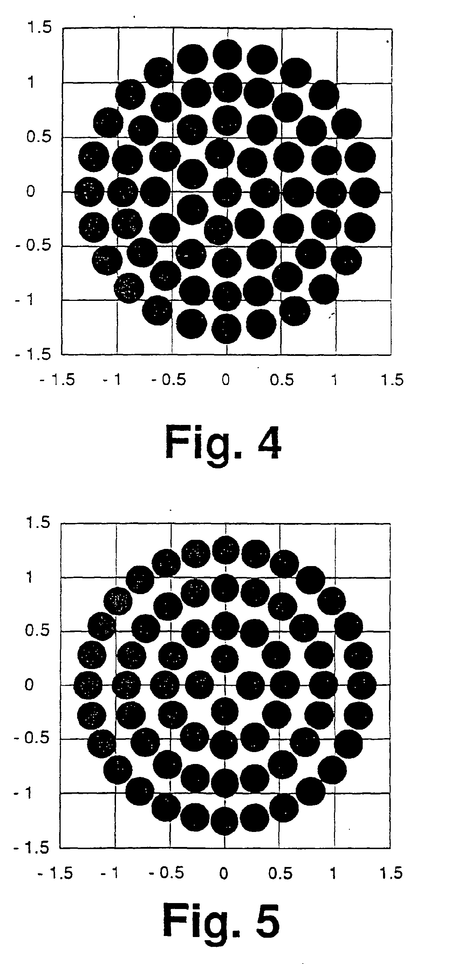

Für die digitale Modulation eignen sich insbesondere solche Signale, deren Symbole innerhalb eines Kreises liegen, da damit die Möglichkeit verbunden ist, bei schaltungsbedingtem maximalen Amplitudenhub ein Maxmium an Leistung bei vorgegebenen Symbolabstand und Symbolanzahl zu übertragen. In Fig. 4 ist ein Beispiel für eine entsprechende Konstellationsebene dargestellt.

Diese Art von Signal ist beipielsweise in.: Bernard Sklar, "Digital Communications, Fundamentals and Applications Prentice-Hall International,Inc,ISBN:0-13-212713, S.412 f" beschrieben.

In den Fig.4 bis Fig.7 sind vorzugsweise zu verwendende Konstellationen dargestellt. Dabei wird die Gesamtheit der Symbole, die durch Real- und Imaginärteil bzw. Betrag und Phase gekennzeichnet werden, als Symbolalphabet, die Anzahl der Symbole als Stufigkeit des Alphabets bezeichnet.

In Fig.5 ist ein weiteres Signal in der Konstellationsebene dargestellt, das sich dadurch auszeichnet, daß der Nullpunkt (entsprechend dem Nullpunkt der Ebene) kein zu übertragendes Symbol enthält. Da die oben genannten Schaltverstärker schaltungsbedingt Signalverzerrungen bei sehr kleinen Amplituden insbesondere beim Hüllkurvenwert "Null"- erzeugen, eignet sich ein Signal, das den Mittelpunkt ausspart, besonders für die Übertragung mittels der beschriebenen Schaltverstärker.

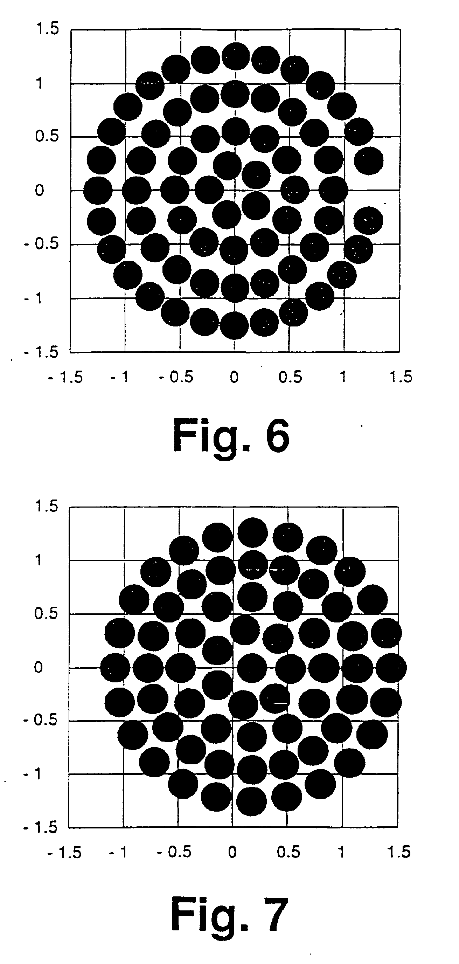

In Fig.6 ist eine Konstellationsebene dargestellt, die eine gezielte Unsymmetrie aufweist. Durch diese Unsymmetrie ist es möglich, ohne eine besondere Synchronisationssequenz die Bezugsphase zu ermitteln. Beipielsweise kann bei der Aussendung ein stets vermiedener Symbolpunkt auf der reellen Achse damit den Phasenwinkel Null kennzeichen. Dadurch ist es empfangsseitig möglich, daß die Phase des Empfangssignales solange gedreht wird, bis das fehlende Symbol wie ausgesendet wieder auf der reellen Achse liegt und damit die Bezugsphase zurückgewonnen wird.

In Fig.7 ist eine Konstellationsebene dargestellt, deren Symmetriepunkt aus dem Nullpunkt der Ebene verschoben ist. Diese Verschiebung wird durch eine Addition mit einem konstanten Wert zu den punktsymmetrischen Symbolpunkten in dem Symbolwandler 3 erreicht. Bei dieser Art der Symbolauswahl wird ständig ein konstanter Trägerwert mitübertragen, der es empfangsseitig gestattet, mit einfachen Mitteln aus dem Empfangssignal die genaue Trägerfrequenz und die Bezugsphase zu ermitteln. Wird die Größe dieses Versatzes klein genug gehalten, so wird der zuvor beschriebene Wunsch nach einer optimalen Ausnutzung des Amplitudenhubes nur gering verletzt.

## Patentansprüche

1. Verfahren zur Übertragung von Signalen mittels hochfrequenter Schwingungen unter Verwendung von Verstärkerschaltungen, welche in Betrag und Phase getrennt angesteuert werden, wobei aus einem digitalen Eingangssignal zwei orthogonale Teilsignale erzeugt werden, aus welchen ein Betragssignal und ein Phasensignal gebildet wird, wobei das Betragssignal zum einen zur betragsmäßigen Ansteuerung der Verstärkungsschaltungen und zum anderen zur Normierung des Phasensignals durch Dividieren herangezogen wird und das normierte Phasensignal direkt oder nach einer Frequenzumsetzung einer Endstufe der Verstärkerschaltungen zur Phasenansteuerung zugeführt wird, **dadurch gekennzeichnet, dass** in einem Symbolwandler nacheinander mehrstufige Modulationssymbole, die auf einer Komplexen Konstellationsebene liegen, durch das Eingangssignal ausgewählt werden, dass die re-elle und die imaginäre Komponente dieser Modulationssymbole getrennt durch eine Filterung in der Bandbreite begrenzt werden, dass die bandbegrenzten Ausgangssignale der Filterung zum einen zur Bildung des Betragssignals herangezogen werden und zum anderen getrennt einer Normierung durch das gebildete Betragssignal und einer Laufzeitverzögerung unterworfen werden, und dass durch Modulation von Komponenten der trägerfrequenten oder zwischenfrequenten Schwingung mit den normierten und zeitverzögerten Signalen und nachfolgende Summierung der so modulierten Komponenten das Phasensignal gebildet wird.

2. Verfahren nach Anspruch 1, **dadurch gekennzeichnet, daß** als Modulationssignal Symbole verwendet werden, die in der komplexen Konstellationsebene innerhalb eines Kreises liegen.

3. Verfahren nach Anspruch 2, **dadurch gekennzeichnet, daß** der Kreismittelpunkt, an dem der Betrag null ist, keinen Symbolwert enthält.

4. Verfahren nach Anspruch 2, **dadurch gekennzeichnet, daß** die Konstellationsebene eine Verschiebung vom Nullpunkt aufweist.

5. Verfahren nach Anspruch 2, **dadurch gekennzeichnet, daß** die Konstellationsebene eine Unsymmetrie zur Gewinnung der Bezugsphase aufweist.

6. Schaltungsanordnung für ein Signalübertragungsverfahren, das ein Signal mittels einer hochfrequenten Schwingung überträgt und eine Verstärkerschaltung mit einer modulierenden Endstufe aufweist, die in Betrag und Phase getrennt angesteuert ist, wobei ein digitales Eingangssignal in Form zweier orthogonaler Teilsignale zum einen einem Betragsbildner zur Erzeugung eines Betragssignals zugeführt ist und zum anderen zur Bildung eines Phasensignals dient, wobei das Betragssignal zur Normierung des Phasensignals durch Dividieren dient, und wobei das Betragssignal zur betragsmäßigen Ansteuerung eines Hüllkurvenverstärkens und das Phasensignal direkt oder nach einer Frequenzumsetzung in einem Frequenzumsetzer (16) dem Steuereingang einer Endstufe (23, 30) zur Phasenansteuerung zugeführt ist, und mit Mitteln zur Bandpassfilterung, **dadurch gekennzeichnet, dass** das Eingangssignal auf einen Symbolwandler gegeben ist, in dem es durch Auswahl mehrstufiger Modulationssymbole, die auf einer Komplexen Konstellationsebene liegen, in ein komplexes Signal mit Realteil (x) und Imaginärteil (y) gewandelt ist, dass der Realteil und der Imaginärteil getrennt je einem pulsformenden und bandbegrenzenden Filter (4, 5) zugeführt ist, dass die Ausgangssignale der Filter zum einen dem Betragsbildner (6) zur Bildung des Betragssignals (7) zugeführt sind und parallel jedes Signal getrennt einem Dividierer (8, 9) zugeführt und dort durch Division mit dem Betragssignal normiert ist, dass die normierten Ausgangssignale der Filter nach geeigneter Laufzeitanpassung in Laufzeitgliedern (10, 11) Komponenten der trägerfrequenten oder zwischenfrequenten Schwingung (17) in Modulatoren (12, 13) modulieren und die so modulierten Komponenten in einem Summierglied (15) zu dem Phasensignal (19) summiert sind.

## Claims

1. Method for transmission of signals by means of high-frequency oscillations using amplifier circuits that are driven separately in amplitude and phase, wherein two orthogonal component signals are produced from a digital input signal, with an amplitude signal and a phase signal being produced from said component signals, wherein the amplitude signal is used for driving the amplifier circuits with respect to amplitude and is also used for normalization of the phase signal by division, and the normalized phase signal is supplied, either directly or after a frequency conversion, to a final stage of the amplifier circuits for driving with respect to phase, **characterized in that** multi-level modulation symbols that lie in the plane of a complex constellation are sequentially selected by means of the input signal in a symbol converter, **in that** the real and imaginary components of these modulation symbols are separately limited in bandwidth by a filtering step, **in that** the band-limited output signals of the filtering step are used to produce the amplitude signal and are also separately subjected to a normalization by the produced amplitude signal and subjected to a transit-time delay, and **in that** the phase signal is produced by modulation of components of the carrier-frequency oscillation or intermediate-frequency oscillation with the normalized and time-delayed signals and by subsequent summation of the components thus modulated.

2. Method according to claim 1, **characterized in that** symbols that lie within a circle in the complex constellation plane are used as modulation signal.

3. Method according to claim 2, **characterized in that** the center point of the circle, at which the amplitude is zero, contains no symbol value.

4. Method according to claim 2, **characterized in that** the constellation plane exhibits a displacement from the zero point.

5. Method according to claim 2, **characterized in that** the constellation plane exhibits an asymmetry for the extraction of the reference phase.

6. Circuit arrangement for a signal transmission method that transmits a signal by means of high-frequency oscillations and has an amplifier circuit with a modulating final stage that is driven separately in amplitude and phase, wherein a digital input signal in the form of two orthogonal component signals is supplied to an amplitude generator for generating an amplitude signal and is also used to produce a phase signal, wherein the amplitude signal is used for normalization of the phase signal by division, and wherein the amplitude signal for driving an envelope curve amplification with respect to amplitude and the phase signal is supplied, either directly or after frequency conversion in a frequency converter (16), to the control input of a final stage (23, 30) for driving with respect to phase, and having means for bandpass filtering, **characterized in that** the input signal is given to a symbol converter in which it is converted into a complex signal with a real part (x) and an imaginary part (y) by selection of multi-level modulation symbols that lie in the plane of a complex constellation, **in that** the real and imaginary components are each separately supplied to a pulse-forming and band-limiting filter (4, 5), **in that** the output signals of the filter are supplied to the amplitude generator (6) to produce the amplitude signal (7) and, in parallel, each signal is separately supplied to a divider (8, 9) and is normalized there through division by the amplitude signal, **in that** the normalized output signals of the filter, following appropriate delay matching in delay elements (10, 11), modulate components of the carrier-frequency or intermediate-frequency oscillation (17) in modulators (12, 13), and the components thus modulated are summed in a summing element (15) to produce the phase signal (19).

## Revendications

1. Procédé de transmission de signaux au moyen d'ondes à haute fréquence utilisant des circuits amplificateurs à commande d'amplitude et de phase séparée, deux signaux partiels orthogonaux étant générés à partir d'un signal d'entrée numérique, à partir desquels un signal d'amplitude et un signal de phase sont formés, le signal d'amplitude servant à la commande d'amplitude des circuits amplificateurs d'une part et à la normalisation du signal de phase par division d'autre part, et le signal de phase normalisé étant appliqué à un étage de sortie des circuits amplificateurs pour la commande de phase, directement ou après une conversion de fréquence, **caractérisé en ce que** le signal d'entrée sélectionne successivement, dans un convertisseur de symboles, des symboles de modulation multi-étage situés sur un plan complexe de constellation, **en ce que** la composante réelle et la composante imaginaire de ces symboles de modulation sont limitées séparément en bande passante par un filtrage, **en ce que** les signaux de sortie à bande limitée obtenus par filtrage servent à la formation du signal d'amplitude d'une part et sont soumis séparément à une normalisation par le signal d'amplitude formé et à un retard de temps de propagation d'autre part, et **en ce que** le signal de phase est formé par modulation de composantes de l'onde à fréquence porteuse ou à fréquence intermédiaire avec les signaux normalisés et retardés suivie d'une addition des composantes ainsi modulées.

2. Procédé selon la revendication 1, **caractérisé en ce qu'**on utilise comme signal de modulation, des symboles qui, dans le plan complexe de constellation, sont situés à l'intérieur d'un cercle.

3. Procédé selon la revendication 2, **caractérisé en ce que** le centre du cercle au niveau duquel l'amplitude est nulle, ne contient pas de valeur de symbole.

4. Procédé selon la revendication 2, **caractérisé en ce que** le plan de constellation présente un décalage du point zéro.

5. Procédé selon la revendication 2, **caractérisé en ce que** le plan de constellation présente une asymétrie pour obtenir la phase de référence.

6. Montage de circuit destiné à un procédé de transmission de signaux transmettant un signal au moyen d'une onde à haute fréquence et comportant un circuit amplificateur à commande d'amplitude et de phase séparée, doté d'un étage de sortie modulant, un signal d'entrée numérique sous la forme de deux signaux partiels orthogonaux étant appliqué à un générateur d'amplitude pour générer un signal d'amplitude d'une part et servant à la formation d'un signal de phase d'autre part, le signal d'amplitude servant à la normalisation par division du signal de phase, et le signal d'amplitude servant à la commande d'amplitude d'un amplificateur d'enveloppe et le signal de phase étant appliqué, directement ou après une conversion de fréquence dans un convertisseur de fréquence (16), à l'entrée de commande d'un étage de sortie (23, 30) pour la commande de phase, et comportant des moyens de filtrage passe-bande, **caractérisé en ce que** le signal d'entrée est appliqué à un convertisseur de symboles dans lequel il est converti en un signal complexe à composante réelle (x) et à composante imaginaire (y) en sélectionnant des symboles de modulation multi-étage situés sur un plan complexe de constellation, **en ce que** la composante réelle et la composante imaginaire sont appliquées chacune séparément à un filtre (4, 5) générateur d'impulsions et limiteur de bande, **en ce que** les signaux de sortie des filtres sont appliqués au générateur d'amplitude (6) pour former le signal d'amplitude (7) et **en ce que**, parallèlement, chaque signal est appliqué séparément à un diviseur (8, 9) dans lequel il est normalisé par division par le signal d'amplitude, **en ce que** les signaux de sortie normalisés des filtres, après compensation correspondante du retard dans des organes de retard (10, 11), modulent des composantes de l'onde (17) à fréquence porteuse ou à fréquence intermédiaire dans des modulateurs (12, 13), et **en ce que** les composantes ainsi modulées sont additionnées au signal de phase (19) dans un organe d'addition (15).
